# EUROPEAN PATENT APPLICATION

(11) **EP 3 662 795 A1**
(43) Date of publication of application: **10.06.2020**
(21) Application number: 19213067.2
(22) Date of filing: 03.12.2019
(51) Int. Cl.: A47J 31/44

(54) **BEVERAGE DISPENSER**

(30) Priority: 06.12.2018 CN 201822046446 U
(71) Applicant: BSH Hausgeräte GmbH, 81739 München (DE)
(72) Inventor: Guo, Yao, Nanjing, Jiangsu (CN); Lu, Peng, Nanjing, Jiangsu 210046 (CN); Ogrizek, Bostjan, 3320 Velenje (SI)

(57) **Abstract**

A beverage dispenser is disclosed in the invention, including a base plate, a front housing, and side plates. The front housing is fixed on the base plate, the side plates include a first side plate and a second side plate, and the first side plate is assembled on a first side surface of the front housing; a first joint portion and a second joint portion are disposed on a top portion of the second side plate, the first joint portion and a first groove on a top portion of the front housing are assembled in a fitting manner, and the second joint portion and a second groove on a top portion of the first side plate are assembled in a fitting manner.

## Description

### BACKGROUND

### Technical Field

The invention relates to a beverage dispenser, and specifically, to a housing structure of a beverage dispenser, mainly applied to a coffee maker, a juice dispenser, and the like.

### Related Art

Currently, a beverage dispenser on the market mainly includes a base plate, a front housing and two side plates, and a beverage outlet is provided on the front housing. To ensure tightness, the base plate, the front housing and the side plates are generally assembled and sealed by using screws. Both assembly and disassembly are inconvenient.

### SUMMARY

The invention provides a beverage dispenser, to better solve the assembly, fixing and seal issues of the beverage dispenser.

To achieve the objective, an aspect of the invention provides a beverage dispenser.

A beverage dispenser according to the invention includes a base plate, a front housing, and side plates. The front housing is fixed on the base plate, the side plates include a first side plate and a second side plate, and the first side plate and a first side surface of the front housing are assembled in a fitting manner; a first joint portion and a second joint portion are disposed on a top portion of the second side plate, the first joint portion and a first groove on a top portion of the front housing are assembled in a fitting manner, and the second joint portion and a second groove on a top portion of the first side plate are assembled in a fitting manner.

The beverage dispenser may be a coffee maker or a juice dispenser. The second side plate may be fixed and assembled with the front housing and the first side plate simultaneously to ensure the tightness between the two side plates and the fixation with the front housing and the base plate.

In an embodiment, the first side plate and the second side plate are fixed to the base plate by using a buckle.

In an embodiment, the first side plate is assembled in an insertion groove on the first side surface of the front housing by means of rotation or translation.

In an embodiment, the second side plate is assembled in the first groove and the second groove by means of rotation.

In an embodiment, the first joint portion and the second joint portion are configured as insertion ribs, and the first groove and the second groove are configured as arc-shaped grooves, to allow the insertion ribs to be inserted and assembled by means of rotation.

In an embodiment, an assembly hole fitting the buckle is disposed on the base plate.

Through the invention, the assembly, fixing, and seal issues of the beverage dispenser may be better solved, fewer screws are reduced.

### BRIEF DESCRIPTION OF THE DRAWINGS

The drawings described herein are used to provide a further understanding of the invention, and serve as a part of this application. The exemplary embodiments of the invention and descriptions thereof are used to explain the invention, and do not constitute improper limitations on the invention. In the accompanying drawings:
FIG. 1 is a schematic structural diagram of a beverage dispenser;
FIG. 2 is a schematic diagram of the assembly of a front housing and a base plate;
FIG. 3 is a schematic diagram of the assembly of a first side plate;
FIG. 4 is a schematic diagram (1) of the assembly of a second side plate;
FIG. 5 is a schematic diagram (2) of the assembly of the second side plate; and
FIG. 6 is a schematic diagram (3) of the assembly of the second side plate.

### DETAILED DESCRIPTION

The invention is described below in detail by using embodiments with reference to the accompanying drawings. It should be noted that the embodiments in this application and the features of the embodiments may be combined with each other if no conflict occurs.

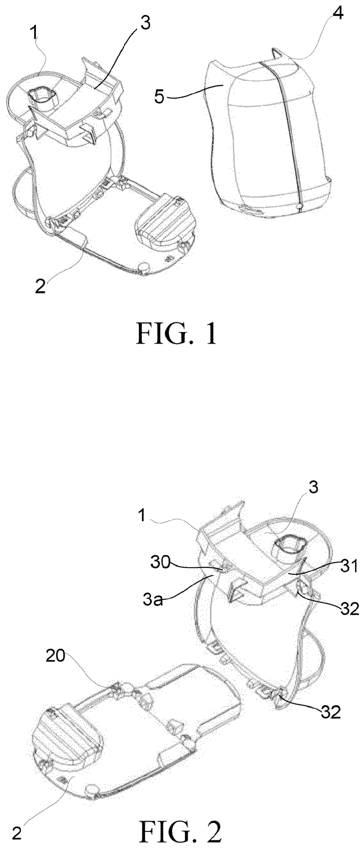

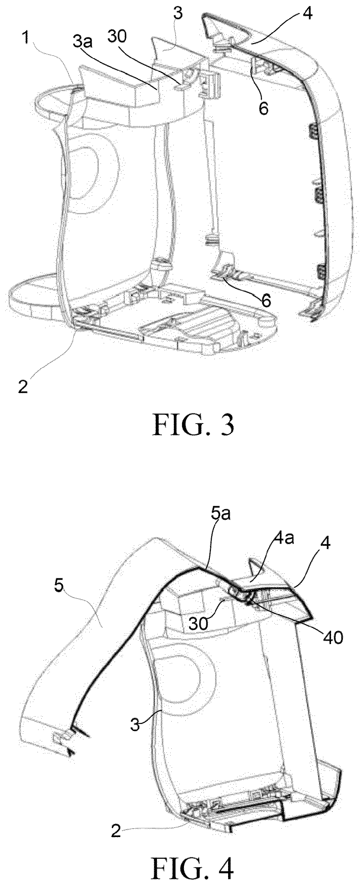

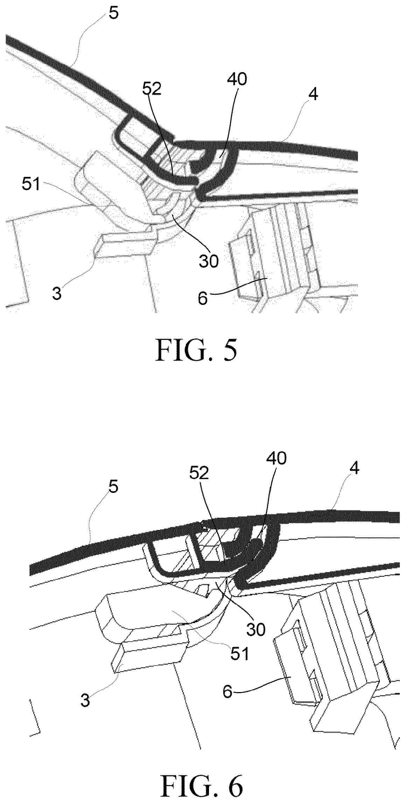

A beverage dispenser provided in this embodiment may be a coffee maker or a juice dispenser. FIG. 1 is a schematic structural diagram of the beverage dispenser, FIG. 2 is a schematic diagram of the assembly of a front housing and a base plate, FIG. 3 is a schematic diagram of the assembly of a first side plate, FIG. 4 is a schematic diagram (1) of a second side plate, FIG. 5 is a schematic diagram (2) of the assembly of the second side plate, and FIG. 6 is a schematic diagram (3) of the assembly of the second side plate. As shown in FIG. 1, FIG. 2, FIG. 3, FIG. 4, FIG. 5, and FIG. 6.

The beverage dispenser 1 includes a base plate 2, a front housing 3, a first side plate 4, and a second side plate 5. The front housing 3 is fixed on the base plate 2, and as shown in FIG. 2, the base plate 2 is inserted in the front housing 3 generally by means of translation or rotation, and is fixed and connected by using a buckle 6.

The first side plate 4 and a first side surface 31 of the front housing 3 are assembled in a fitting manner. A first joint portion 51 and a second joint portion 52 are disposed on a top portion 5a of the second side plate 5. The first joint portion 51 and a first groove 30 on a top portion 3a of the front housing 3 are assembled in a fitting manner. The second joint portion 52 and a second groove 40 on a top portion 4a of the first side plate 4 are assembled in a fitting manner.

Different from the prior art, the second side plate 5 can be fixed and assembled with the front housing 3 and the first side plate 4 simultaneously to ensure the tightness between the two side plates 4 and 5.

Furthermore, the first side plate 4 and the second side plate 5 are fixed to the base plate 2 by using the buckle 6. By using the buckle, the cost of using screws can be saved, and the assembly time can be reduced. An assembly hole 20 fitting the buckle 6 is provided on the base plate 2.

Preferably, as shown in FIG. 3, the first side plate 4 is assembled in an insertion groove 32 on the first side surface 31 of the front housing 3 by means of rotation or translation, and is connected and fixed to the front housing 3 and the base plate 2 by using the buckle 6.

Preferably, as shown in FIG. 4, FIG. 5, and FIG. 6, the second side plate 5 is inserted and assembled in the first groove 30 and the second groove 40 by means of rotation. As shown in the figure, the second side plate 5 is screwed in by means of rotation from the first side plate 4 and the front housing 3, and the structure of the first joint portion 51 and the second joint portion 52 on the top portion of the screwed-in second side plate 5 achieves a fixing function. In addition, the bottom and side surfaces of the second side plate 5 are connected and fixed to the front housing 3 and the base plate 2 by using the buckle 6.

Specifically, as shown in FIG. 5 and FIG. 6, the first joint portion 51 and the second joint portion 52 are configured as insertion ribs, and the first groove 30 and the second groove 40 are configured as arc-shaped grooves, to allow the insertion ribs 51 and 52 to be inserted and assembled by means of rotation.

The embodiments described above and shown in the accompanying drawings are merely used to describe the invention, but are not all contents of the invention. Any forms of variations made by a person of ordinary skill in the related art without departing from the scope of the basic technical concept of the invention are still within the protection scope of the invention.

## Claims

1. A beverage dispenser (1), comprising a base plate (2), a front housing (3), and side plates (4, 5), wherein the front housing is fixed on the base plate, and the side plates (4, 5) comprise a first side plate (4) and a second side plate (5), **characterized in that**:
the first side plate (4) and a first side surface (31) of the front housing (3) are assembled in a fitting manner; and a first joint portion (51) and a second joint portion (52) are disposed on a top portion (5a) of the second side plate (5), the first joint portion (51) and a first groove (30) on a top portion (3a) of the front housing (3) are assembled in a fitting manner, and the second joint portion (52) and a second groove (40) on a top portion (4a) of the first side plate (4) are assembled in a fitting manner.

2. The beverage dispenser according to claim 1, **characterized in that**:
the first side plate (4) and the second side plate (5) are fixed to the base plate (2) by using a buckle (6).

3. The beverage dispenser according to claim 1 or 2, **characterized in that**:
the first side plate (4) is assembled in an insertion groove (32) on the first side surface (31) of the front housing (3) by means of rotation or translation.

4. The beverage dispenser according to claim 3, **characterized in that**:
the second side plate (5) is assembled in the first groove (30) and the second groove (40) by means of rotation.

5. The beverage dispenser according to claim 4, **characterized in that**:
the first joint portion (51) and the second joint portion (52) are configured as insertion ribs, and the first groove (30) and the second groove (40) are configured as arc-shaped grooves, to allow the insertion ribs to be inserted and assembled by means of rotation.

6. The beverage dispenser according to claim 2, **characterized in that**:
an assembly hole (20) fitting the buckle (6) is disposed on the base plate (2).
